# EUROPEAN PATENT APPLICATION

(11) **EP 1 797 951 A1**
(43) Date of publication of application: **20.06.2007**
(21) Application number: 05112230.7
(22) Date of filing: 15.12.2005
(51) Int. Cl.: B01J 29/40, B01J 29/08, B01J 37/10, C10G 11/05

(54) **Catalytic cracking catalyst additive**

(71) Applicant: TOTAL PETROCHEMICALS RESEARCH FELUY, 7181 Seneffe (Feluy) (BE)
(72) Inventor: Dath, Jean-Pierre, B-7970 Beloeil Hainault (BE); Vermeiren, Walter, B-3530 Houthalen (BE); Noiret, André, B-5030 Gembloux (BE)

(57) **Abstract**

A process for producing a catalyst additive for an FCC catalytic cracking process, the process comprising the steps of providing an MFI or MEL aluminosilicate having a silicon/aluminium atomic ratio of from 10 to 250; de-aluminating the MFI or MEL aluminosilicate by extracting from 20 to 40 wt% of the alumina therefrom; combining the de-aluminated MFI or MEL aluminosilicate with a binder; and calcining the combination of the de-aluminated MFI or MEL aluminosilicate and the binder at elevated temperature to produce the catalyst additive.

## Description

The present invention relates to a process for producing a catalyst additive for a catalytic cracking process, to a catalytic cracking catalyst, and to a catalytic cracking process.

It is known in the refining industry to employ fluidised catalytic cracking (FCC) for the conversion of heavy petroleum fractions to lighter products by catalytic cracking. The catalysts used in the FCC process typically contain zeolite, a number of zeolites being known for use as FCC catalysts. Cracking of heavy feedstock's like vacuum gas oil (VGO) and residues occurs on catalysts which tyically are proprietary Y-zeolites. Products are dry gas (H₂ and C₁-C₂), LPG (C₃-C₄), gasoline, LCO and slurry.

It is also known to employ in the FCC process a catalyst additive, over and above the base zeolite catalyst, for increasing the octane rating of the gasoline fractions produced and also for producing light-olefins. It is known for the additive to comprise a ZSM-5 type zeolite.

Thus for about the last decade, petroleum refiners have tried to boost the propylene yield of their FCC's by adding ZSM-5 catalyst to the catalyst inventory. This zeolite catalyses selectively the formation of propylene out of heavy olefins and out of long linear paraffins.

For the refiner, the most important parameter is however the feed conversion and hence the addition of ZSM-5 will be limited in order to maintain conversion. The higher the crystal content of the additive, the less the major Y-catalyst will be diluted and conversion affected.

The applicant has found that both commercial FCC additives and pure ZSM-5 can suffer form the problem that the product distribution in the effluent can change over time. Fresh catalyst (which may have been regenerated) produces a lot of paraffins and little propylene, whereas the existing catalyst in the FCC reactor becomes more and more selective for propylene. After a certain time period an optimum yield of propylene is obtained that starts to drop off. Depending on the initial state of the zeolite, this optimum comes sooner or later. It is generally assumed that the half-live time of ZSM-5 type additives is only about 10 days.

The constraints on existing FCC units are generally located in the gas plant (cracked gas compressor, absorbers and LPG recovery section). Important properties of a propylene-booster with respect to the operation of the FCC unit are:
1. The part of propylene in the C3-cut should be as high as possible so that more C3's can be treated in the LPG recovery section and more C3's can be upgraded in a downstream C3-splitter to chemical or polymer grade propylene.
2. Dry-gas make must be minimised in order not to constrain the cracked gas compressor and absorbers.
3. Highly active additive is required in order to avoid diluting too much the main Y-zeolite and hence loosing feed conversion. This points to a high ZSM-5 concentration in the additive.
4. Highly stable additive (long half-live time) is also required to limit its make up and to avoid diluting again the main Y-zeolite.

Moreover it is known that the zeolite powder for use as an FCC addition catalyst can further be formulated with a special binder that allows making microsized particles with an improved hydrothermal stability. For example, aluminium phosphate may be used as the binder, by making up A1PO4 in a gel-type solution that can accommodate the zeolite powder in suspension so that the suspension can be pumped and spray-dried.

It would be advantageous to provide a zeolite FCC addition catalyst containing phosphorous incorporating other binders and also providing the features required of a zeolite FCC addition catalyst indicated above.

A paper entitled "The Effect of Silica-to-Alumina Ratio on the Performance of ZSM-5 FCC Additives" by Christopher W. Kuehler of Chevron Research and Technology Company, presented at the Symposium on Advances in FCC Conversion Catalysts, 211th National Meeting, American Chemical Society, New Orleans, LA, USA, March 24-291996 discloses FCC additives containing ZSM-5. This document discuses the significance of the Si/Al ratio on performance ofthe additive, particularly for the formation of propylene and butylene.

EP-A-0229609 discloses the use of an octane- enhancing FCC additive comprising ZSM-5 zeolite.

US-A-4,988,653 discloses the use of an additive catalyst comprising at least one of a shape selective paraffin cracking-isomerisation zeolite (such as H-ZSM-5) and a shape selective aliphatic aromatisation zeolite (such as gallium ZSM-5).

EP-A-0600686 discloses an FCC process for producing light olefins and low emissions fuel products in which the catalyst contains a mixture of zeolite-Y as the base catalyst and ZSM-5 as an additive.

EP-A-0142313 discloses a zeolite catalyst with enhanced catalytic activity, particularly for use in an FCC process. The zeolite has undergone an aluminium extraction treatment with an aluminium extraction reagent such as a strong mineral acid or a chelating agent, this increasing the acid activity of the zeolite. The initial aluminosilicate zeolite which is subject to this treatment has a silica to alumina molar ratio of at least about 12, and may be a ZSM-5 zeolite.

US-A-6,007,698 discloses a process for catalytic cracking of petroleum feeds using a catalyst comprising an IM-5 zeolite which has optionally been de-aluminated and is at least partially in its acid form and a matrix which is normally amorphous or of low crystallinity, and optionally comprises a Y-type zeolite with a faujasite structure.

WO-A-98/41595 discloses a catalytic cracking process for cracking of a hydrocarbon feedstock to produce an enhanced yield of C₃-C₅ olefins in which the feedstock is contacted with a catalytic composition comprising a large pore molecular sieve and an additive component comprising a phosphorous-containing zeolite which may comprise ZSM-5.

WO-A-01/3 8460 discloses a catalyst composition for FCC which has high efficiency in the production of light olefms. The catalyst composition is prepared by ex-situ activating an olefin-selective zeolite with at least 10 wt% of a phosphorous-containing compound based on the total amount of olefin-selective zeolite, combining the zeolite with 10-40 wt% catalytic cracking component, binder and 0-25 wt% silica in a slurry so that the total amount of amorphous alumina present in the final catalyst composition is at least 10 wt%, and spray-drying the slurry to form catalyst particles.

EP-A-0909582 discloses a catalytic cracking process for producing light olefins. The catalyst comprises 10-70 wt% clay, 5-85 wt% inorganic oxides and 1-50 wt% zeolite, the zeolite being in a mixture of 0-25 wt% Y-type zeolite and 75-100 wt% of a phosphorous and aluminium or phosphorous and magnesium or phosphorous and calcium- containing high silica zeolite having a structure of pentasil, the zeolite optionally being ZSM-5.

US-A-5043307 discloses a modified crystalline alumino-silicate zeolite catalyst and its use in the production of lubes of high viscosity index. The catalyst is modified by use of a process in which an as synthesised crystalline aluminosilicate containing organic template material is steamed to decompose at least a portion of the template material and to extract aluminium from the zeolite. The zeolite is then contacted with a de-aluminising agent which forms a water-soluble complex with aluminum to remove a further quantity of zeolitic aluminium from the zeolite. Since the zeolite contains the organic template, only the surface of the zeolite is so modified. The surface-modified zeolite (such as ZSM-5) has a silica/alumina ratio of up to 108.

In a known FCC unit, a typical propylene output is 3 to5 wt%. The propylene output may be increased to up to about 7-8wt% propylene from the FCC unit by introducing the known ZSM-5 catalyst, as an additive to the base catalyst, into the FCC unit to "squeeze" out more propylene from the incoming hydrocarbon feedstock being cracked.

Although some of the prior art documents referred to above disclose the use of catalyst additives for FCC processes, they do not address the problem of achieving high propylene purity in any C₃ fraction present in the effluent. There is an increasing demand for propylene having high purity, in particular for the manufacture of polypropylene.

The production of dry gas in the FCC effluent is a significant commercial disadvantage since the downstream gas plant for separating the dry gas requires a large capital investment and also needs in practice to be de-bottlenecked together with the propylene splitter. In addition, although some of the prior art documents referred to above which disclose the use of catalyst additives for FCC processes address the desire of achieving a low dry gas in the effluent, there is still a need for an FCC process having high propylene yield and purity coupled with low dry gas production.

The present invention aims to provide an improved catalyst additive for FCC applications, a process for producing such a catalyst additive and a catalytic cracking process including such a catalyst.

It is an aim of the present invention to provide a process for producing a catalyst additive which is for use in a fluidised catalytic cracking (FCC) process which can lead to increased propylene purity and/or reduced dry gas in the effluent as compared to known commercially available catalyst additives.

It is another aim of the invention to provide a fluidised catalytic cracking (FCC) process which can lead to increased propylene purity and/or reduced dry gas in the effluent as compared to known processes employing commercially available catalyst additives.

The present invention provides a process for producing a catalyst additive for an FCC catalytic cracking process, the process comprising the steps of providing an MFI or MEL aluminosilicate having a silicon/aluminium atomic ratio of from 10 to 250; de-aluminating the MFI or MEL aluminosilicate by extracting from 20 to 40 wt% of the alumina therefrom; combining the de-aluminated MFI or MEL aluminosilicate with a binder; and calcining the combination of the de-aluminated MFI or MEL aluminosilicate and the binder at elevated temperature to produce the catalyst additive.

Preferably, the silicon/aluminium atomic ratio of the de-aluminated MFI or MEL aluminosilicate is from 11 to 1000.

Preferably, the silicon/aluminium atomic ratio of the initial MFI or MEL aluminosilicate is from 10 to 300.

Preferably, the MFI or MEL aluminosilicate is an MFI-type crystalline silicate of the ZSM-5 type.

Preferably, the binder comprises aluminium oxide, silicon oxide, phosphates and clays or a mixture of both.

Preferably, the catalyst additive comprises from 25 to 75 wt% of the de-aluminated MFI or MEL aluminosilicate and from 75 to 25 wt% binder.

In one preferred aspect, the de-aluminating step on the MFI or MEL aluminosilicate is carried out by both heating the MFI or MEL aluminosilicate in steam and then contacting the MFI or MEL aluminosilicate with a complexing agent for aluminium, to remove aluminium from throughout the crystalline silicate framework and extract aluminium from the catalyst.

In another preferred aspect, the de-aluminating step on the MFI or MEL aluminosilicate is carried out by both heating the MFI or MEL aluminosilicate in steam and then contacting the MFI or MEL aluminosilicate with a phosphorous-containing mineral acid to remove aluminium from throughout the crystalline silicate framework and extract aluminium from the catalyst, and to deposit phosphorous in the dealuminated alumonosilicate.

Preferably, the phosphorous-containing mineral acid comprises phosphoric acid.

Preferably, the dealuminated alumonosilicate, after treatment with the phosphorous-containing mineral acid and washing, contains from 0.1 to 0.3 wt% phosphorous.

Preferably, the process further comprises the step of combining the catalyst additive with a Y-type zeolite to produce a composite catalyst for fluidised catalytic cracking of a hydrocarbon feedstock, the composite catalyst comprising from 50 to 99.5 wt% of a Y-type zeolite containing catalyst and from 0.5 to 50 wt% of the catalyst additive.

Preferably, the composite catalyst comprises from 1.5 to 15 wt% of the de-aluminated MFI or MEL aluminosilicate and from 98.5 to 85wt% of the binder and the Y-type zeolite.

Preferably, in the combining step the de-aluminated crystalline silicate and binder are spray dried.

Preferably, the calcination is carried out at a temperature of about 700°C for a period of about 1-48 hours.

The present invention also provides a composite catalyst for fluidised catalytic cracking of a hydrocarbon feedstock, the composite catalyst comprising from 50 to 99.5 wt% of a Y-type zeolite and, as an additive therefor, from 0.5 to 50 wt% of a de-aluminated MFI or MEL aluminosilicate catalyst produced by the process of the present invention.

Preferably, the composite catalyst comprises from 1.5 to 5 wt% of the de-aluminated MFI or MEL aluminosilicate and from 98.5 to 95wt% of the binder and the Y-type zeolite.

The present invention yet further provides a composite catalyst for fluidised catalytic cracking of a hydrocarbon feedstock, the composite catalyst comprising from 50 to 99.5 wt% of a Y-type zeolite and, as an additive therefor, from 0.5 to 50 wt% of a de-aluminated MFI or MEL aluminosilicate catalyst comprising a de-aluminated MFI or MEL aluminosilicate having a silicon/aluminium atomic ratio of from 11 to 300 and a binder, the composite catalyst comprising from 1.5 to 5 wt% of the de-aluminated MFI or MEL aluminosilicate and from 98.5 to 95wt% of the binder and the Y-type zeolite.

The present invention still further provides a process for the fluidised catalytic cracking of a hydrocarbon feedstock, the process comprising contacting a hydrocarbon feedstock with the composite catalyst of the present invention to produce an effluent containing propylene.

The FCC feedstock may be passed over the composite catalyst at an inlet temperature ranging from 500 to 650°C, typically about 525°C with a catalyst to oil ratio (C/O ratio) of from 3 to 40, more preferably from 3 to 15, yet more preferably from 4 to 10, and typically about 5.5.

The present invention also provides the use, for producing in the effluent a C3-cut of enhanced propylene purity, of the composite catalyst of the invention in a fluidised catalytic cracking process for a hydrocarbon feedstock.

The present invention also provides the use, for producing in the effluent a reduced content of dry gas, of the composite catalyst of the invention in a fluidised catalytic cracking process for a hydrocarbon feedstock.

Without being bound by theory, from the research that they have carried out the present inventors believe that either commercial FCC additives, or pure ZSM-5 exhibiting a low Si/Al ratio of 25, tend to suffer during the FCC cracking process as a result of steaming at high temperature which occurs during the cracking and regeneration process. It is believed that the result of this progressive steaming is that during cracking in an FCC reactor, the product distribution changes over time: fresh catalyst produces a lot of paraffins and little propylene, whereas steamed catalyst becomes more and more selective for propylene. It is believed that after a certain degree of steaming, an optimum yield of propylene is obtained, that thereafter starts to drop off. Depending on the initial state of the zeolite, this optimum comes sooner or later. It is generally assumed that the half-live time of ZSM-5 type additives is only about 10 days.

It is supposed by the present inventors, again without being bound by theory, that in the presence of steam, the zeolite undergoes dealumination with migration of the extra-framework aluminum towards the outer surface of the zeolite crystals where it can partially block the pores. As a result, due to the dilution of the framework aluminum, it is believed that the zeolite has a lower hydrogen-transfer activity and becomes more selective towards olefms production at the expense of paraffins formation.

It is known that ZSM-5 zeolites can be made without the use of an organic template, which results in a cheap product. The prerequisite for making ZSM-5 without template is that the Si/Al ratio has to be lower than 30, resulting in a zeolite with a high acid density. During the FCC process, as a result of the steaming that occurs this zeolite can be subject to fast dealumination and potentially to pore plugging. A high acid density would also result in high hydrogen-transfer activity that lowers the propylene content in the C₃ cut. So, the present invention is at least partly predicated on the finding that if a ZSM-5 with low Si/Al ratio is steamed in a controlled manner in a preliminary treatment step prior to the FCC cracking process, followed by an aluminum extraction step, it is expected that it would resist better to subsequent steaming that occurs during the FCC cracking process. The same finding can apply to other MFI-type and MEL-type crystalline silicates.

In accordance with a preferred aspect of the invention, a de-aluminated crystalline silicate FCC addition catalyst may exhibit lower propylene yield in FCC configuration than commercial additives on equal crystal content, but higher propylene purity. In addition, the same advantage can be achieved by the use of de-aluminated ZSM-5 zeolites as FCC additives, but with the further advantage that have been synthesised without the use of organic templates, which makes them more commercially attractive because they are even cheaper to manufacture. It has been shown by the inventors that the de-alumination modification renders the zeolite more selective towards propylene. When compared to commercial or non-modified ZSM-5 additives the propylene yield is slightly lower but the C3 purity is significantly higher and additional dry-gas make is very low. For existing FCC units that are generally constrained in the LPG recovery section, additional dry-gas and propane are minimised here.

In one preferred aspect of the invention, the aluminium extraction step for the modification of the zeolite has been adapted in order to remove aluminium and at the same time add phosphorus onto the zeolite. The phosphorus addition has been found not to change the catalytic properties. However, it can be expected that such phosphorus containing zeolites are much more hydrothermally stable.

The present invention therefore can provide an FCC additive that exhibits good propylene production capacity, increases the C3 purity and minimise the additional dry-gas make. The FCC additive may be spray-dried at high crystal content and exhibits improved properties.

In this specification, the term "silicon/aluminium atomic ratio" is intended to mean the Si/Al atomic ratio of the overall crystalline silicate material, which may be determined by chemical analysis. In particular, for crystalline silicate materials, the stated Si/Al ratios apply not just to the Si/Al framework of the crystalline silicate but rather to the whole material.

In particularly preferred embodiments of the present invention, the hydrocarbon feedstock comprises a petroleum fraction selected from at least one of naphtha, gas oil, vacuum gas oil, and residual oil. The hydrocarbon feedstock may comprise a mixture of one or more of the above-described feedstocks.

The crystalline silicate may be a zeolite, a silicalite or any other silicate in that family, but preferably is ZSM-5. Other crystalline silicates for use in the invention comprise ZSM-11, ZSM-35 and ZSM-48. Mixtures of two or more of these MFI-crystalline silicates may be employed.

The catalyst additive is manufactured by removing aluminium from a commercially available crystalline silicate of the MFI-type thereby to reduce the silicon/aluminium atomic ratio. The present invention most preferably uses a commercially available ZSM-5 which has a silicon/aluminium atomic ratio of from 10 to 300, yet more preferably around 12. The starting MFI-type crystalline silicate has preferably been synthesised without the use of an organic template molecule, which is otherwise often used to synthesise such silicates. This means that the pore structure of the silicate is accessible throughout its crystallite structure. Therefore any de-alumination can be achieved substantially homogeneously through the silicate framework.
In accordance with the present invention, the commercially available crystalline silicate is modified by a steaming process which reduces the tetrahedral aluminium in the crystalline silicate framework and converts the aluminium atoms into octahedral aluminium in the form of amorphous alumina. Although in the steaming step aluminium atoms are chemically removed from the crystalline silicate framework structure to form alumina particles, those particles cause partial obstruction of the pores or channels in the framework. Accordingly, following the steaming step, the crystalline silicate is subjected to an extraction step wherein amorphous alumina is removed from the pores and the micropore volume is, at least partially, recovered. The physical removal, by a leaching step, of the amorphous alumina from the pores by the formation of a water-soluble aluminium complex yields the overall effect of de-alumination of the crystalline silicate. In this way by removing aluminium from the crystalline silicate framework and then removing alumina formed therefrom from the pores, the process aims at achieving a substantially homogeneous de-alumination throughout the whole pore surfaces of the catalyst. This can be done because no residual organic template molecule is present in the crystalline silicate framework. This reduces the acidity of the catalyst. The reduction of acidity ideally occurs substantially homogeneously throughout the pores defined in the crystalline silicate framework. This is because in the cracking process hydrocarbon species can enter deeply into the pores. Accordingly, the reduction of acidity and thus the reduction in hydrogen transfer reactions which would reduce the stability of the catalyst are pursued throughout the whole pore structure in the framework. In a preferred embodiment, the framework silicon/aluminium ratio is increased by this process from a value of from 10 to 50 to a value of from 10 to 300.

In the steam treatment step, the temperature is preferably from 420 to 870°C, more preferably from 540 to 815°C. A typical temperature is around 550°C. The pressure is preferably atmospheric pressure and the water partial pressure may range from 13 to 200kPa. The steam atmosphere preferably contains from 5 to 100vol% steam with from 0 to 95vol% of an inert gas, preferably nitrogen. A more preferred atmosphere comprises 72vol% steam and 28vol% nitrogen i. e. 72kPa steam at a pressure of one atmosphere. The steam treatment is preferably carried out for a period of from 1 to 200 hours, more preferably from 20 to 100 hours. A typical steaming period is around 48 hours. The steam treatment tends to reduce the amount of tetrahedral aluminium in the crystalline silicate framework by forming alumina. As stated above, the steam treatment tends to reduce the amount of tetrahedral aluminium in the crystalline silicate framework, by forming alumina.

Following the steam treatment, the extraction process is performed in order to de-aluminate the catalyst by leaching. The aluminium is preferably extracted from the crystalline silicate by a complexing agent which tends to form a soluble complex with alumina, or by a phosphorous-containing mineral acid, such as phosphoric acid (H3PO4).

The complexing agent is preferably in an aqueous solution thereof. The complexing agent may comprise an organic acid such as citric acid, formic acid, oxalic acid, tartaric acid, malonic acid, succinic acid, glutaric acid, adipic acid, maleic acid, phthalic acid, isophthalic acid, fumaric acid, nitrilotriacetic acid, hydroxyethylenediaminetriacetic acid, ethylenediaminetetracetic acid, trichloroacetic acid trifluoroacetic acid or a salt of such an acid (e.g. the sodium salt) or a mixture of two or more of such acids or salts.

The complexing agent for aluminium preferably comprises an organic acid which forms a water-soluble (polydendate) complex with aluminium, and in particular removes alumina, which is formed during the steam treatment step, from the crystalline silicate by reaction ofthe complexing agent with the alumina to form an aqueous solution including a water-soluble complex of aluminium.

A particularly preferred complexing agent is an amine, and most preferably comprises ethylene diamine tetraacetic acid (EDTA) or salt thereof, in particular the sodium salt thereof.

Preferably, the complexing agent is a chelating agent or ligand which contains donor atoms that can combine by coordinated bonding with a single atom to form a cyclic structure called a chelating complex or a chelate.

In the aluminium leaching step, the crystalline silicate is immersed in the acidic solution or a solution containing the complexing agent and is then preferably heated, for example heated at total reflux at atmospheric or pressurised conditions, for an extended period of time, for example 18 hours.

The crystalline silicate, preferably zeolite, more preferably ZSM-5, catalyst is mixed with a binder, preferably an inorganic binder, and spray dried or shaped to a desired shape, e.g. pellets. The binder is selected so as to be resistant to the temperature and other conditions employed in the catalyst manufacturing process and in the subsequent catalytic cracking process. The binder is an inorganic material selected from clays, silica, alumina's, phosphates, metal oxides such as ZrO₂ and/or metals, or gels including mixtures of silica and metal oxides. Inactive materials for the binder may suitably serve as diluents to control the amount of conversion so that products can be obtained economically and orderly without employing other means for controlling the reaction rate. It is desirable to provide a catalyst having a good attrition resistance. This is because in commercial use, it is desirable to prevent the catalyst from breaking down into powder-like materials. Such clay or oxide binders have been employed normally only for the purpose of improving the attrition resistance of the catalyst. A particularly preferred binder for the catalyst of the present invention comprises a mixture of alumina and kaolin, preferably in equal proportions. The relative proportions of the finely divided de-aluminated crystalline silicate material and the inorganic oxide matrix of the binder can vary widely. Typically, the binder content ranges from 25 to 75 % by weight, more typically from 30 to 60% by weight, based on the weight of the composite catalyst. Such a mixture of crystalline silicate and an inorganic oxide binder is referred to as a formulated crystalline silicate.

In mixing the catalyst with a binder, the catalyst may be formulated into pellets, extruded into other shapes, or formed into a spray-dried powder.

Thereafter, the formulated crystalline silicate is calcined in air or an inert gas, preferably at a temperature of from 500 to 850°C, more preferably from 550 to 800°C, yet more preferably from 600 to 750°C, for a preferred period of from 1 to 60 hours, yet more preferably from 3 to 30 hours, still more preferably from 5 to 35 hours.

The catalytic cracking process is performed in a fluidised bed reactor of the FCC type used for fluidised-bed catalytic cracking in the oil refinery.

In addition, the mixing of the catalyst with the binder may be carried out either before or after the steaming and extraction steps.

After the catalytic cracking process, the reactor effluent is sent to a fractionator. The desired the C₃ cut, containing propylene, is fractionated and thereafter purified in order to remove all the contaminants such as sulphur species, arsine, *etc*..

The various aspects of the present invention will now be described in greater detail with reference to the following non-limiting examples.

### Example 1

A sample of a ZSM-5 zeolite was used as a starting material for the preparation of a modified catalyst additive for FCC applications. The ZSM-5 zeolite starting material had the composition (amounts of Na₂O, CaO, Fe₂O₃, Al₂O₃ and the silicon/aluminium atomic ratio, and the loss of ignition (LOI)) shown in Table 1. It may be seen that the silicon/aluminium atomic ratio is approximately 12. The starting ZSM-5 zeolite had been manufactured without the use of an organic template material , which can only be achieved when the Si/A1 atomic ratio in the parent synthesis gel is below 30.

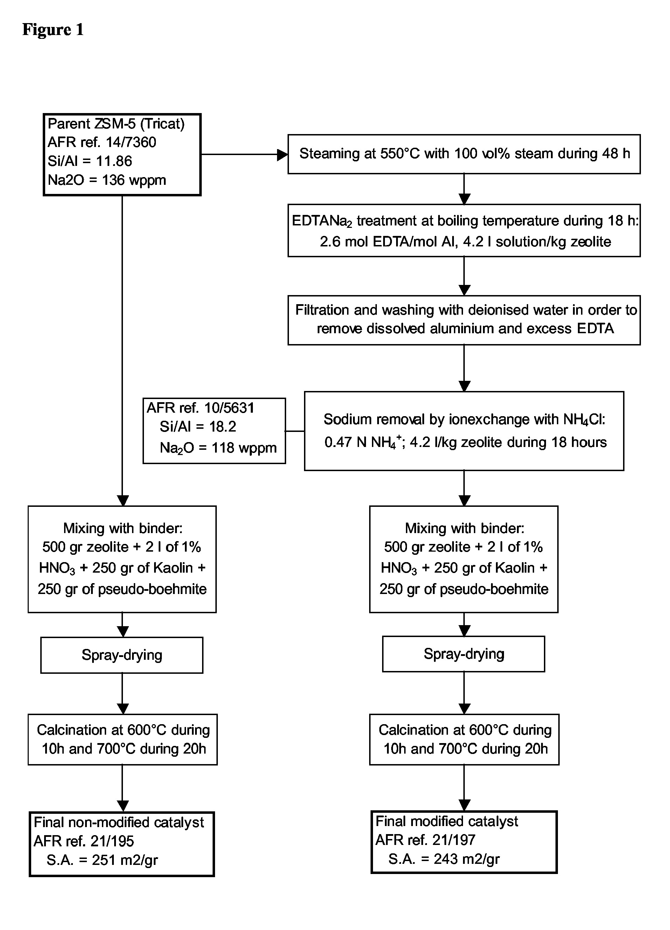

The reaction scheme for producing the addition catalyst is summarised in Figure 1.

The ZSM-5 starting material was then steamed at a temperature of 550°C for a period of 48 hours. Thereafter, the ZSM-5 was subject to aluminium extraction using ethylene diamine tetraacetic acid (EDTA) and subsequently ion-exchanged with NH₄Cl. The modified ZSM-5 had the composition also indicated in Table 1. It may be seen that the steaming and de-alumination process has increased the silicon/aluminium atomic ratio of the ZSM-5 to approximately 18, because approximately one third of the original alumina was removed from the ZSM-5 crystals as a result of the steaming and extraction steps in the de-alumination process. The modified ZSM-5 was then spray-dried with 25% by weight of pseudo-boehmite and 25% of kaolin as a binder material. The spray-dried material was then calcined first at a temperature of 600°C for a period of 10 hours and then at a temperature of 700°C for a period of 20 hours.

The physical properties of the resultant catalyst, comprising 50 wt% of the modified ZSM-5, 25 wt% alumina (as pseudo-boehmite) and 25 wt% kaolin are shown in Table 2. The attrition properties of the resultant catalyst (0.5% after 5 hours and 2.57% after an additional 20 hours) compare favourably with the determination by the inventors that current commercial FCC catalysts give attrition ranges between 0.2 and 0.95% after 5 hours and between 0.5 and 2.2% after an additional 20 hours.

The resultant catalyst was then used as a catalyst additive, together with a Y-type zeolite catalyst available in commerce under the product code "Centurion 58HA" available in commerce from AKZO NOBEL Catalysts B.V., Stationplein 4, PO Box 247, 3800 Amersfoort, The Netherlands, such Y-type catalyst having a low rare earth content. The Y-type catalyst contained 2799 wppm Ni; 3021 wppm V; 0.25 wppm Na and 1.35wt% Re2O3, and had a BET of 150 m2/gram.
The resultant combined catalyst was employed in an FCC catalytic cracking process on a laboratory scale, using a low sulphur vacuum gas oil feedstock. The feedstock was a blend of VGO and atmospheric residue (F635), having density @15°C: 0.9174g/cm3, sulfur: 1.318 wt%, Conradson carbon: 2.03 wt%, and D1160: 5 vol% at 326°C and 95 vol% at 645°C. The laboratory-scale FCC reactor was an ACE instrument available in commerce from Xytel Corporation, 1001 Cambridge Drive, Elk Grove Village, Illinois 60007, USA. The cracking conditions were a reaction temperature of 525°C and a C/O ratio of 5.5. The C/O ratio is the catalyst to oil ratio, determined by the weight ratio of the regenerated catalyst to the fresh feed in the riser feed injection zone of the FCC reactor. The composite catalyst contained 9wt% of the modified ZSM-5 catalyst. The catalyst additive had a crystal content of 50 wt%. The crystal content is defined as the percentage weight of the modified ZSM-5 (prior to calcination) compared to the total weight of the composite catalyst. The composition of the effluent is shown in Table 3.

### Comparative Example 1

The unmodified ZSM-5 starting material of Example 1 was mixed with the same binder, and subjected to the same spray-drying process and calcination, as for the modified ZSM-5 of Example 1 to produce a catalyst comprising 50 wt% of the unmodified ZSM-5, 25 wt% alumina (in the form of pseudo-boehmite) and 25 wt% kaolin. The reaction scheme for producing the addition catalyst is also summarised in Figure 1. The physical properties of the resultant unmodified ZSM-5 catalyst are summarised in Table 4. The crystal content in the overall inventory was 4.5 wt%.

This unmodified ZSM-5 catalyst was used as an additive for the same Y-type zeolite and under the same reaction conditions (temperature and C/O value) using the same feedstock and with the additive being added in the same amount of 9 wt% based on the total weight of the catalyst. The composition of the effluent is summarised in Table 3.

A comparison of the composition of the effluents for Example 1 and Comparative Example 1 shows that the use of the modified ZSM-5 catalyst in accordance with the invention reduces the content of the dry gas (consisting of the combination of C₁ and C₂ hydrocarbons and hydrogen sulphite) quite significantly. The non-treated ZSM-5 employed in Comparative Example 1 tends to produce a lot of such dry gas whose allowable production rate is often constrained by the wet gas compressor (WGC). Most of the additionally made dry gas consists of C₂ hydrocarbons, which are in general not recovered in FCC units. By using the modified ZSM-5 catalyst additive in accordance with the present invention, this reduces the production of incremental dry gas, which is a significant technical and commercial advantage.

Furthermore, a comparison of the effluent compositions of Example 1 and Comparative Example 1 shows that use of the modified ZSM-5 additive increases the purity of the C₃-cut. Thus the ratio of propylene (C₃=) to total C₃'s is increased to 0.873 in Example 1 from 0.742 in Comparative Example 1. Similarly, the butylene purity in the C₄-cut is increased in Example 1 as compared to Comparative Example 1. The results also show that the coke and delta coke production is lower in Example 1 than in Comparative Example 1. This is advantageous because coke tends to reduce the lifetime of the catalyst. Delta coke is the difference between the coke content of the spent catalyst and the coke content of the regenerated catalyst in the FCC reactor.

### Example 2

The modified ZSM-5 catalyst additive of Example 1 was used in the same catalytic cracking process as for Example 1, but with the difference that the de-aluminated ZSM-5 type additive was added in an amount of only 3.6 wt% (as compared to 9 wt% for Example 1) based on the total weight of the catalyst. The crystal content of the composite catalyst was 1.8%. The composition of the effluent is summarised in Table 3.

### Comparative Example 2

Comparative Example 1 was repeated but using only 3.6 wt% (as compared to 9 wt%) of the unmodified ZSM-5 type additive. The crystal content of the composite catalyst was 1.8%. The results are also summarised in Table 3.

A comparison of Example 2 and Comparative Example 2 shows that, as for Example 1 and Comparative Example 1, the use of the modified ZSM-5 catalyst reduces dry gas production, increases the propylene purity, increases the butylene purity, and reduces the coke and delta coke production as compared to use of the corresponding unmodified ZSM-5 type additive.

### Comparative Example 3

In this Comparative Example, a composite catalyst, including the Centurion 58 Y-type zeolite employed in the Examples, and a commercially available ZSM-5 type additive, the additive being present in an amount of 9% by weight based on a total weight of the composite catalyst, was employed in the same catalytic cracking process on a laboratory scale as in the Examples, using the same feedstock and the same cracking conditions. The commercial ZSM-5 additive comprised the catalyst sold under the product designation K2000 by the company Akzo Nobel. Such a catalyst contains 25 wt% of the ZSM-5 and 75 wt% binder. Therefore the composite catalyst had a crystal content of 2.25 wt% (i.e. contained 2.25 wt% ZSM-5 and 97.5 wt% of both binder therefor and Y-zeolite). The composition of the effluent is summarised in Table 3.

### Comparative Example 4

Comparative Example 3 was repeated but using, instead of the K2000 catalyst, a commercial additive, also containing 25% of crystals (i.e. 25 wt% ZSM-5 and 75 wt% binder), sold under the product designation Z cat HP from the company Intercat, Inc. of PO Box 412, Sea Girt, NJ 08750, United States of America. The composition of the effluent is also summarised in Table 3. The composite catalyst therefore had a crystal content of 2.25 wt% (i.e. contained 2.25 wt% ZSM-5 and 97.5 wt% of both binder therefor and Y-zeolite).

It may be seen by comparison of both Comparative Example 3 and Comparative Example 4 with Example 1 that the use of the modified ZSM-5 type additive in accordance with the present invention also reduces the dry gas production, increases the propylene purity, and slightly increases the butylene purity as compared to the use of the commercial ZSM-5 additives.

It is to be noted that the use of the commercial ZSM-5 catalysts of Comparative Examples 3 and 4 tends to reduce the amount of coke or delta coke formed as compared to the use of the unmodified ZSM-5 catalyst of Comparative Examples 1 and 2. It is believed that the commercial ZSM-5 additives of Comparative Examples 3 and 4 include phosphorous, which is probably absent in the unmodified ZSM-5 additive of Comparative Examples 1 and 2. It is further believed that the presence of phosphorous, useful for providing an improvement in hydrothermal stability, tends to reduce the hydrogen transfer activity, thereby resulting in a reduced production of paraffins and aromatics, and so tends to reduce coke formation.

### Comparative Example 5

In this Comparative Example, the reference Y-type zeolite was employed in a catalytic cracking process using the same conditions as in the previous Examples and Comparative Examples but without any additive for the Y-type zeolite. In other words, the catalyst comprised only the Y-type zeolite. The composition of the effluent is summarised in Table 3.

It may be seen that the use of the modified ZSM-5 additive in accordance with the invention tends approximately to double the propylene yield as compared to when no additive is present and also tends to improve the propylene purity of the C₃-cut.

The use in Example 2 of the modified ZSM-5 additive in an amount of only 3.6 wt% based on the total weight of the catalyst and having a crystal content of the composite catalyst of 1. 8%, tends to be more comparable to the corresponding crystal content employed using the commercial additives in Comparative Examples 3 and 4, than the higher crystal content using the modified ZSM-5 type additive of Example 1, in which the additive is present in an amount of 9 wt% based on the total weight of the catalyst. In Comparative Example 2, the unmodified ZSM-5 shows similar results to the commercial additives of Comparative Examples 3 and 4 regarding the propylene yield, its purity and the production of dry gas. A comparison of the conversion values for the various Examples and Comparative Examples shown in Table 3 indicates that the use of the modified ZSM-5 additive in Examples 1 and 2 exhibits substantially the same conversion as for the absence of any additive in Comparative Example 5. In contrast, the use of unmodified ZSM-5 in Comparative Examples 1 and 2 and the use of the commercial additives in Comparative Examples 3 and 4 indicates a conversion penalty (i.e. lower liquid conversion values in Table 3) as compared to the absence of a catalyst additive.

Typically, the use of the modified ZSM-5 type additive in accordance with the invention produces about 35 to 50 wt% less dry gas than the use of the corresponding amount of either the two commercial ZSM-5 type additives or same amount of the unmodified ZSM-5 type additive, as illustrated by Comparative Examples 1 and 2.

Although the commercial ZSM-5 type additives of Comparative Examples 3 and 4 tend to produce a larger propylene amount in the effluent than for Examples 1 and 2, the propylene purity is reduced. From Table 3 it may be seen that as compared to Comparative Example 5 where no additive is employed, the modified catalysts of Examples 1 and 2 increase the propylene purity whereas the catalysts of Comparative Examples 1 to 4 decrease the propylene purity. A similar trend can be observed for the C₄ cut, and the butylene purity. Typically, the commercial additives tend to reduce the propylene purity (compared to the absence of any additive) when added at a crystal content of 2.25% whereas the modified ZSM-5 additive in accordance with the invention correspondingly tends to increase the propylene purity when added at a crystal content of from 1.8 to 4.5%.

### Examples 3, 4, 5 and 6 and Comparative Example 6

It is known that commercial ZSM-5 FCC additives contain phosphorus. The most important advantage of adding phosphorus is that the hydrothermal stability of the ZSM-5 zeolite is improved. The presence of phosphorus even allows tracking of the presence of the additive in the FCC inventory.

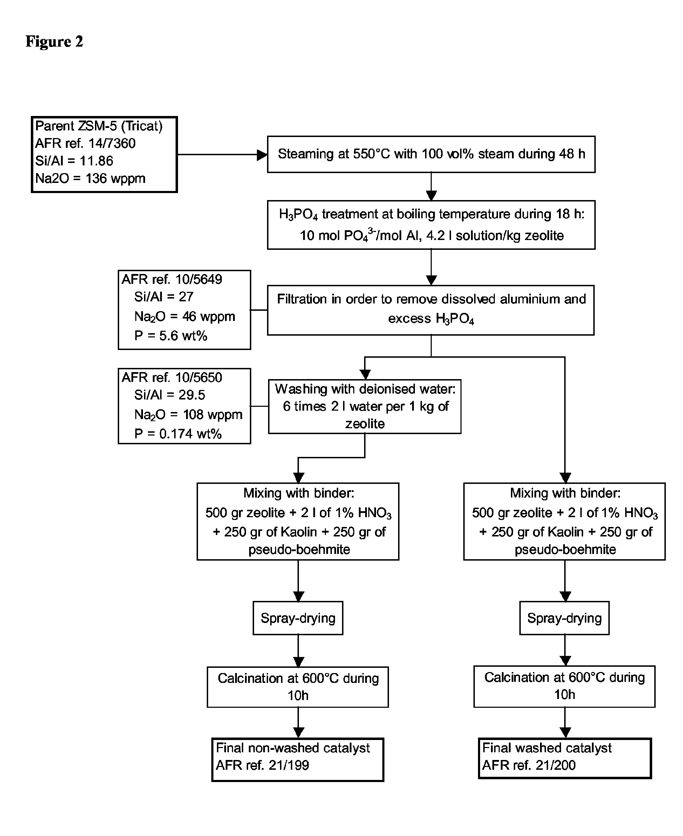

As shown in Examples 1 and 2, the removal of aluminium from ZSM-5 made without template has a beneficial effect on dry-gas and propylene purity. In these examples, it was attempted to remove aluminium and deposit phosphorus at the same time. This was realised by washing the steamed ZSM-5 with phosphoric acid instead of EDTA. Table 5 gives the chemical analysis ofthe starting ZSM-5 catalyst (used in Comparative Example 6) and the treated ZSM-5's, the treatment the processes summarized in Figure 2, to produce the catalysts of Examples 3 to 6. The reaction scheme for producing the addition catalyst is summarised in Figure 2.

The extraction of the steamed ZSM-5 with phosphoric acid was found to be more efficient than with EDTA. More than 50% of the initially present aluminium was found to have been removed with phosphoric acid. It is believed, without being bound by theory, that phosphoric acid can probably enter into the micropores of the zeolite whereas EDTA cannot. It was also noted that, after the extraction step, when the suspension was filtered but not rinsed with additional water, more than 50% of the aluminium was removed with the aqueous solution and 5.6 wt% of phosphorus remained on the zeolite. Thorough rinsing with de-ionised water (6 times 2 liters for 1000 gr of ZSM-5) was found only to remove phosphorus down to 0.17 wt% and 10% additional aluminium. It is believed that removing aluminium and at the same time adding phosphorus to the ZSM-5, renders the zeolite more selective for propylene, and also tends to add the phosphorus probably to the right place where it could stabilise the zeolite under hydrothermal conditions.

The two phosphorus-containing ZSM-5 zeolites (prepared with water rinsing and without water rinsing) were spray-dried with 25% of kaolin and 25% of pseudo-boehmite and tested on the ACE pilot unit under the same operation conditions as the former modified ZSM-5 catalysts. The catalyst prepared without water rinsing was relatively high in phosphorous and used in Examples 3 and 5 and the catalyst prepared with water rinsing was relatively low in phosphorous and used in Examples 4 and 6. Comparative Example 6 employed the Y-zeolite without any additive. Table 6 shows the detailed mass balance of the effluent.

The results from Examples 3 to 6 show that the phosphorus added ZSM-5 exhibits similar propylene yield and C3 purity as the modified ZSM-5 without phosphorus for Examples 1 and 2. Once again the dry-gas yield is only increased by 5-15%. The ZSM-5 containing phosphorous would however exhibit increased stability under hydrothermal conditions.

### Examples 7, 8, 9 and 10 and Comparative Examples 7 to 14

In these Examples a de-aluminated silicalite was evaluated to determine its performance as an additive in a FCC application.

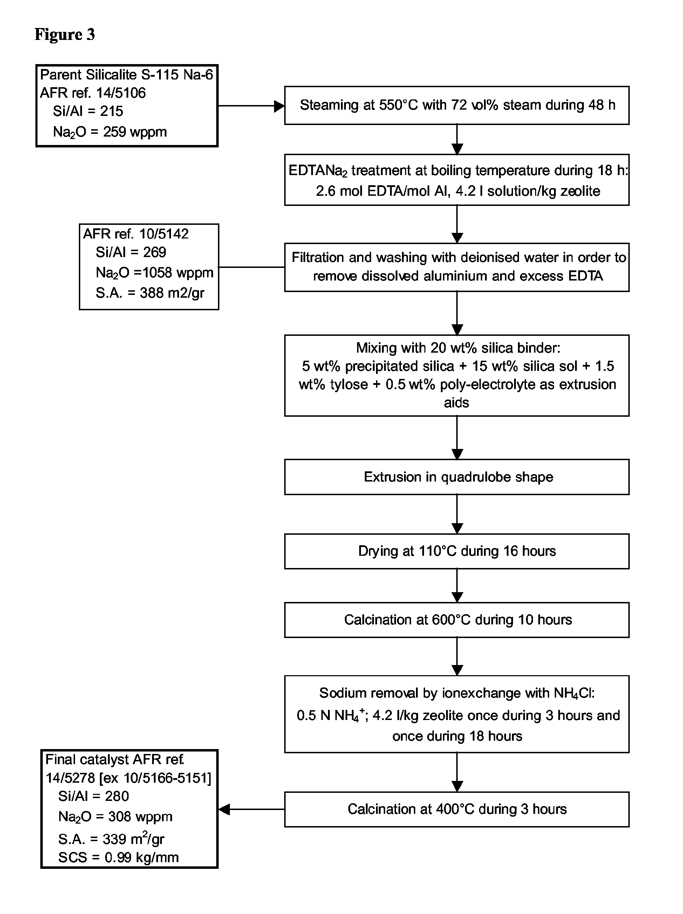

An extruded silicalite catalyst having the composition shown in Figure 3 and containing 80 wt% of crystals was crushed and sieved. Only the 53-90 µm fraction was retained for testing. The detailed manufacturing procedure of the FCC addition catalyst is given in Figure 3.

The silicalite so formed was combined with the Y-type zeolite employed in Examples 1 and 2 to produce a composite FCC cracking catalyst, with the additive being used in the amounts shown in Tables 7 and 8. A number of Examples were run through the FCC reactor under the conditions summarised in Tables 7 and 8 using different additive content and at two different reaction temperatures. Comparative Examples were also carried out as summarized in Tables 7 and 8 using no additive and using another commercially available FCC addition catalyst, namely Zcat+ (otherwise known as Z-Cat Plus) additive available in commerce from Intercat, of PO Box 412, Sea Girt, NJ 08750 USA, which had a crystal content of 14wt%.

Tables 7 and 8 give the detailed mass balance data on the effluent using the de-aluminated silicalite catalyst and using the Zcat+ additive based on equal additive content, and compared with a base case without any ZSM-5 type additive.

The de-aluminated silicalite FCC addition catalyst does not exhibit higher propylene production than the Zcat+ FCC addition catalyst although its crystal content is about 6 times higher. The purity of the C3 cut is slightly higher, about 0.5-1.0%. However, the dry gas make does not increase when adding the de-aluminated silicalite FCC addition catalyst, whereas with Zcat+ it increases by about 0.5% at both tested temperatures.

For Examples 9 and 10, the de-aluminated silicalite FCC addition catalyst was also evaluated compared to Comparative Examples 13 and 14, employing the Zcat+ FCC addition catalyst, on an equal crystal basis of 1.3 wt% Only 1.6 wt% of de-aluminated silicalite FCC additive was used compared to 10 wt% for Zcat+. At this low level of additive the de-aluminated silicalite FCC catalyst gives little additional propylene. The active acid sites ofthe de-aluminated silicalite FCC catalyst are probably too much diluted to be efficient. The overall Si/A1 ratio is above 250 whereas for commercial additives this ratio is probably lower than 30.

Comparison of Comparative Examples 7 and 8 on the one hand and Comparative Examples 13 and 14 on the other hand shows that doubling the amount of Zcat+ from 5 to 10% does not add as much of propylene as the first 5%. It tends however to decrease the propylene purity in the C3 cut when adding more Zcat+. This is not the case with the de-aluminated silicalite, which indicates that the incremental propylene production on the de-aluminated silicalite occurs at a very high C3 purity.

**TABLE 1**

| Composition parameter | Units | Unmodified ZSM-5 starting material | Modified de-aluminated ZSM-5 |
|---|---|---|---|
| Na₂O | wppm | 136 | 118 |
| CaO | wppm | 330 | 208 |
| Fe₂O₃ | wpm | 337 | 283 |
| Al₂O₃ | wt% | 6.6704 | 4.4525 |
| LOI | wt% | 11.68 | 2.4 |
| Si/Al | atom/atom | 11.86 | 18.2 |

**TABLE 2**

| | Catalyst | Granulometry (µm) | | | | | | | | Attrition (%) | |
|---|---|---|---|---|---|---|---|---|---|---|---|
| | | <60 | 60-100 | 100-140 | 140-200 | 200-270 | 270-400 | >400 | >40 | 0-5h | 50-25h |
| Example 1 | 50% ZSM-5 (modified) 25% Al₂O₃ 25% Kaolin | 10.2 | 12. 6 | 16.7 | 24.9 | 18.6 | 12.6 | 4.2 | 95.2 | 0.5 | 2.57 |

**TABLE 4**

| | Catalyst | Granulometry (µm) | | | | | | | | Attrition (%) | |
|---|---|---|---|---|---|---|---|---|---|---|---|
| | | <60 | 60-100 | 100-140 | 140-200 | 200-270 | 270-400 | >400 | >40 | 0-5h | 50-25h |
| Comp. Ex. 1 | 50% ZSM-5 25% Al₂O₃ 25% Kaolin | 17.2 | 11. 4 | 15.7 | 23.2 | 17.2 | 11.2 | 3.8 | 95.8 | 0.5 | 2.03 |

**TABLE 3**

| | Example 1 | Example 2 | Comp. Ex. 1 | Comp. Ex. 2 | Comp. Ex.3 | Comp. Ex. 4 | Comp. Ex. 5 |
|---|---|---|---|---|---|---|---|
| Additive (wt%) | 9 | 3.6 | 9 | 3.6 | 9 | 9 | 0.0 |
| Crystals (wt%) | 4.50 | 1.80 | 4.50 | 1.80 | 2.25 | 2.25 | 0.00 |
| H2: | 0.39 | 0.46 | 0.40 | 0.39 | 0.33 | 0.37 | 0.42 |
| C1: | 0.74 | 0.77 | 0.82 | 0.78 | 0.70 | 0.73 | 0.82 |
| C2: | 1.70 | 1.31 | 5.06 | 3.69 | 3.49 | 3.73 | 1.13 |
| C1+C2+H2S: | 3.31 | 2.95 | 6.74 | 5.34 | 5.06 | 5.33 | 2.82 |
| H2S: | 0.87 | 0.87 | 0.87 | 0.87 | 0.87 | 0.87 | 0.87 |
| C3: | 1.43 | 1.22 | 3.94 | 2.51 | 2.38 | 2.52 | 0.93 |
| C3=: | 9.88 | 7.79 | 11.35 | 11.50 | 11.36 | 11.43 | 4.75 |
| C3 Total | 11.31 | 9.01 | 15.29 | 14.02 | 13.75 | 13.95 | 5.68 |
| C3=/C3 Total | 0.873 | 0.864 | 0.742 | 0.821 | 0.827 | 0.819 | 0.836 |
| I-C4: | 3.63 | 3.45 | 3.98 | 4.25 | 3.80 | 3.83 | 2.79 |
| N-C4: | 0.76 | 0.77 | 1.41 | 1.05 | 0.99 | 1.00 | 0.70 |
| I-C4=: | 3.46 | 2.98 | 3.39 | 3.47 | 3.54 | 3.32 | 1.96 |
| N-C4=: | 1.60 | 1.53 | 1.30 | 1.44 | 1.50 | 1.46 | 1.20 |
| cis 2 butene | 1.78 | 1.73 | 1.51 | 1.60 | 1.70 | 1.59 | 1.24 |
| trans 2 butene | 2.49 | 2.42 | 2.13 | 2.25 | 2.39 | 2.26 | 1.71 |
| C4 Total | 13.72 | 12.88 | 13.71 | 14.06 | 13.92 | 13.45 | 9.61 |
| C4=/C4 Total | 0.68 | 0.67 | 0.61 | 0.62 | 0.66 | 0.64 | 0.64 |
| iC4=ic4 | 0.95 | 0.86 | 0.85 | 0.82 | 0.93 | 0.87 | 0.70 |
| LPG: | 25.03 | 21.90 | 29.00 | 28.08 | 27.66 | 27.40 | 15.29 |
| LPG Olefinicity | 76.76 | 75.13 | 67.83 | 72.18 | 74.08 | 73.20 | 71.06 |
| LCCS (CS-100) | 21.49 | 24.28 | 18.30 | 19.15 | 18.82 | 18.62 | 30.08 |
| HCCS(150-221) | 12.06 | 13.32 | 9.95 | 11.20 | 11.21 | 10.57 | 13.22 |
| TCCS (C5-221) | 33.55 | 37.59 | 28.25 | 30.35 | 30.03 | 29.19 | 43.29 |
| LCO (221-350) | 16.07 | 16.42 | 14.86 | 15.20 | 15.82 | 15.98 | 16.51 |
| HCO+slurry350+ | 14.64 | 13.88 | 12.78 | 12.72 | 14.74 | 15.28 | 13.75 |
| CONVERSION | 69.28 | 69.69 | 72.36 | 72.08 | 69.44 | 68.74 | 69.74 |
| Liq.Conversion | 74.65 | 75.91 | 72.11 | 73.63 | 73.51 | 72.57 | 75.09 |
| Delta COKE: | 1.27 | 1.24 | 1.45 | 1.44 | 1.16 | 1.18 | 1.32 |
| COKE: | 7.00 | 6.80 | 7.95 | 7.92 | 6.36 | 6.45 | 7.25 |

**TABLE 5**

| | Units | ZSM-5 TRICAT starting material | Steamed, H₃PO₄ extracted and filtered | Steamed, H₃PO₄ extracted, filtered and washed |
|---|---|---|---|---|
| | | Comp. Ex. 6 | Examples 3 and 5 | Examples 4 and 6 |
| Na2O | wppm | 136 | 46 | 108 |
| CaO | wppm | 330 | 178 | 182 |
| Fe2O3 | wppm | 377 | 171 | 151 |
| Al2O3 | wt% | 6.6704 | 3.0461 | 2.7974 |
| LOI | wt% | 11.68 | 3.99 | 1.83 |
| Si/Al | at./at. | 11.86 | 27 | 29.5 |
| Phosphorus | wt% | | 5.609 | 0.174 |

**TABLE 6**

| | | | | | |
|---|---|---|---|---|---|
| | | | | | |

| | C. Ex. 6 | Ex. 3 | Ex. 4 | Ex. 5 | Ex. 6 |
|---|---|---|---|---|---|
| Additive (wt%) | 0.00 | 3.60 | 3.60 | 9.00 | 9.00 |
| Crystal (%) | 0.00 | 1.80 | 1.80 | 4.50 | 4.50 |
| | | | | | |
| Dry Gas | 3.02 | 3.15 | 3.18 | 3.43 | 3.44 |
| H2 | 0.44 | 0.39 | 0.40 | 0.36 | 0.35 |
| C1 | 0.70 | 0.70 | 0.70 | 0.67 | 0.70 |
| C2 | 1.01 | 1.20 | 1.21 | 1.52 | 1.51 |
| H2S | 0.87 | 0.87 | 0.87 | 0.87 | 0.87 |
| C3 | 0.87 | 1.22 | 1.22 | 1.44 | 1.41 |
| C3s | 5.34 | 8.83 | 8.84 | 11.37 | 10.94 |
| Propane | 0.87 | 1.22 | 1.22 | 1.44 | 1.41 |
| Propylene | 4.48 | 7.61 | 7.63 | 9.93 | 9.54 |
| C3=/C3s | 83.78 | 86.23 | 86.25 | 87.33 | 87.14 |
| C4s | 9.84 | 12.93 | 12.71 | 15.07 | 14.15 |
| Isobutane | 2.94 | 3.71 | 3.86 | 4.18 | 4.18 |
| n-Butane | 0.69 | 0.76 | 0.75 | 0.81 | 0.77 |
| Isobutylene | 1.90 | 2.92 | 2.81 | 3.65 | 3.38 |
| 1-Butene | 1.25 | 1.50 | 1.45 | 1.66 | 1.56 |
| c-2-Butene | 1.26 | 1.65 | 1.57 | 1.93 | 1.74 |
| t-2-Butene | 1.80 | 2.39 | 2.27 | 2.84 | 2.52 |
| C4 Olefins | 6.85 | 9.88 | 9.46 | 12.07 | 11.02 |
| C4=/C4s | 0.63 | 0.65 | 0.64 | 0.67 | 0.65 |
| LPG | 15.18 | 21.76 | 21.55 | 26.45 | 25.09 |
| LCN | 29.59 | 24.65 | 24.37 | 22.11 | 22.46 |
| HCN | 11.58 | 11.26 | 11.43 | 11.22 | 10.92 |
| TCN | 41.17 | 35.91 | 35.80 | 33.33 | 33.39 |
| LCO | 18.35 | 17.94 | 17.79 | 16.82 | 17.23 |
| Bottoms | 15.54 | 14.69 | 14.71 | 13.50 | 14.00 |
| Conversion, wt% | 66.11 | 67.37 | 67.51 | 69.68 | 68.77 |
| COKE | 6.73 | 6.55 | 6.97 | 6.47 | 6.85 |
| Liquid conversion | 74.70 | 75.60 | 75.14 | 76.60 | 75.71 |
| Delta COKE: | 1.23 | 1.19 | 1.27 | 1.18 | 1.25 |
| Catalyst-to-oil, wt/wt | 5.49 | 5.49 | 5.49 | 5.49 | 5.49 |
| Reaction T °C | 525 | 525 | 525 | 525 | 525 |

**TABLE 7**

| | **C.Ex.7** | **C.Ex.8** | **Ex.7** | **Ex.8** | **C.Ex.9** | **C. Ex.10** |
|---|---|---|---|---|---|---|
| Additive (wt%) | 0.00 | 0.00 | 5.00 | 5.00 | 5.00 | 5.00 |
| Pentasil Crystal (wt%) | 0.00 | 0.00 | 4.00 | 4.00 | 0.70 | 0.70 |
| Centurion 58 (wt%) | 100.00 | 100.00 | 95.00 | 95.00 | 95.00 | 95.00 |
| Dry gas | 2.75 | 3.39 | 2.83 | 3.47 | 3.30 | 4.05 |
| Hydrogen | 0.27 | 0.30 | 0.22 | 0.23 | 0.17 | 0.25 |
| Methane | 0.64 | 0.92 | 0.55 | 0.81 | 0.55 | 0.79 |
| Ethane | 0.45 | 0.61 | 0.39 | 0.54 | 0.43 | 0.58 |
| Ethylene | 0.53 | 0.69 | 0.79 | 1.02 | 1.28 | 1.57 |
| Hydrogen sulphide | 0.87 | 0.87 | 0.87 | 0.87 | 0.87 | 0.87 |
| C3s | 6.46 | 7.13 | 10.20 | 11.26 | 11.52 | 12.66 |
| Propane | 1.04 | 1.24 | 1.27 | 1.50 | 1.60 | 1.80 |
| Propylene | 5.42 | 5.89 | 8.93 | 9.75 | 9.91 | 10.86 |
| C3=/C3s | 83.85 | 82.64 | 87.53 | 86.65 | 86.07 | 85.79 |
| C4s | 10.54 | 10.92 | 13.75 | 14.35 | 14.20 | 14.47 |
| Isobutane | 3.25 | 3.06 | 3.75 | 3.53 | 4.15 | 3.77 |
| n-Butane | 0.76 | 0.83 | 0.77 | 0.85 | 0.87 | 0.91 |
| Isobutylene | 1.99 | 2.21 | 3.23 | 3.49 | 3.30 | 3.50 |
| Butadiene | 0.00 | 0.00 | 0.00 | 0.00 | 0.00 | 0.00 |
| 1-Butene | 1.36 | 1.50 | 1.64 | 1.79 | 1.62 | 1.76 |
| c-2-Butene | 1.29 | 1.35 | 1.75 | 1.90 | 1.72 | 1.83 |
| t-2-Butene | 1.89 | 1.97 | 2.60 | 2.80 | 2.54 | 2.70 |
| C4 Olefins | 6.52 | 7.03 | 9.22 | 9.98 | 9.18 | 9.79 |
| C4=/C4s | 0.62 | 0.64 | 0.67 | 0.70 | 0.65 | 0.68 |
| LPG | 17.00 | 18.05 | 23.95 | 25.61 | 25.72 | 27.12 |
| LN | 26.56 | 27.00 | 20.01 | 19.73 | 18.66 | 17.91 |
| HCN | 14.62 | 14.24 | 15.00 | 15.70 | 14.32 | 14.92 |
| TCN | 41.18 | 41.24 | 35.01 | 35.43 | 32.97 | 32.83 |
| LCO | 19.63 | 18.47 | 19.34 | 17.94 | 18.67 | 17.59 |
| Bottoms | 14.43 | 13.68 | 14.36 | 13.16 | 14.88 | 13.95 |
| Conversion, wt% | 65.94 | 67.85 | 66.30 | 68.91 | 66.45 | 68.45 |
| Coke | 5.01 | 5.17 | 4.51 | 4.39 | 4.46 | 4.45 |
| Catalyst-to-Oil wt/wt | 4.02 | 4.02 | 4.02 | 4.02 | 4.02 | 4.02 |
| Reaction Temp °C | 525 | 545 | 525 | 545 | 525 | 545 |

**TABLE 8**

| | C. Ex. 11 | C. Ex.12 | Ex. 9 | Ex. 10 | C. Ex. 13 | C.Ex.14 |
|---|---|---|---|---|---|---|
| Crystal Content (wt%) | 0 | 0 | 1.28 | 1.28 | 1.3 | 1.3 |
| Additive Content (wt%) | 0 | 0 | 1.6 | 1.6 | 10 | 10 |
| Centurion 58 (wt%) | 100 | 100 | 96.4 | 96.4 | 90 | 90 |
| Cracking Temperature, °C | 525 | 545 | 525 | 545 | 525 | 545 |
| Catalyst-to-Oil, wt/wt | 4.0 | 4.0 | 4.0 | 4.0 | 4.0 | 4.0 |
| Conversion, wt% | 65.9 | 67.9 | 64.9 | 68.9 | 67.0 | 67.9 |
| Coke | 5.0 | 5.2 | 4.4 | 4.5 | 4.7 | 4.4 |
| Dry Gas | 2.8 | 3.4 | 2.7 | 3.3 | 4.1 | 4.8 |
| Hydrogen | 0.3 | 0.3 | 0.2 | 0.3 | 0.2 | 0.2 |
| Hydrogen Sulfide | 0.9 | 0.9 | 0.9 | 0.9 | 0.9 | 0.9 |
| Methane | 0.6 | 0.9 | 0.6 | 0.8 | 0.6 | 0.8 |
| Ethane | 0.5 | 0.6 | 0.4 | 0.5 | 0.5 | 0.6 |
| Ethylene | 0.5 | 0.7 | 0.6 | 0.8 | 2.0 | 2.3 |
| Propane | 1.0 | 1.2 | 1.1 | 1.3 | 2.1 | 2.1 |
| Propylene | 5.4 | 5.9 | 6.9 | 7.5 | 11.4 | 12.4 |
| n-Butane | 0.8 | 0.8 | 0.7 | 0.8 | 1.0 | 0.9 |
| Isobutane | 3.3 | 3.1 | 3.4 | 3.2 | 4.4 | 3.7 |
| C4 Olefins | 6.5 | 7.0 | 7.6 | 8.3 | 9.5 | 9.9 |
| 1-Butene | 1.4 | 1.5 | 1.6 | 1.7 | 1.7 | 1.8 |
| Isobutylene | 2.0 | 2.2 | 2.5 | 2.7 | 3.6 | 3.7 |
| c-2-Butene | 1.3 | 1.4 | 1.4 | 1.6 | 1.7 | 1.8 |
| t-2-Butene | 1.9 | 2.0 | 2.1 | 2.3 | 2.5 | 2.6 |
| Butadiene | 0.0 | 0.0 | 0.0 | 0.0 | 0.0 | 0.0 |
| LCN | 26.6 | 27.0 | 23.0 | 26.8 | 17.3 | 29.6 |
| HCN | 14.6 | 14.2 | 15.0 | 13.1 | 18.1 | 17.9 |
| Gasoline | 41.2 | 41.2 | 38.0 | 40.0 | 29.9 | 29.6 |
| LCO | 19.6 | 18.5 | 20.5 | 18.0 | 18.1 | 17.9 |
| HCO | 0.0 | 0.0 | 0.0 | 0.0 | | 0.0 |
| Bottoms | 14.4 | 13.7 | 14.6 | 13.1 | 14.9 | 14.2 |
| TOTAL | 100.0 | 100.0 | 100.0 | 100.0 | 100.0 | 100.0 |
| LPG | 17.0 | 18.1 | 19.8 | 21.1 | 28.4 | 29.0 |
| C3s | 6.5 | 7.1 | 8.1 | 8.8 | 13.4 | 14.5 |
| C3=/C3s | 83.8 | 82.6 | 85.8 | 85.2 | 84.8 | 85.5 |
| C4s | 10.5 | 10.9 | 11.7 | 12.3 | 14.9 | 14.5 |
| C4=/C4s | 0.6 | 0.6 | 0.6 | 0.7 | 0.6 | 0.7 |
| iC4s/C4s | 10.2 | 9.5 | 0.5 | 0.5 | 0.5 | 9.0 |
| C3=/C4= | | | 0.9 | 0.9 | 1.2 | 1.3 |
| LCO/Bottoms | 1.4 | 1.4 | 1.4 | 1.4 | 1.2 | 1.3 |

## Claims

1. A process for producing a catalyst additive for an FCC catalytic cracking process, the process comprising the steps of providing an MFI or MEL aluminosilicate having a silicon/aluminium atomic ratio of from 10 to 250; de-aluminating the MFI or MEL aluminosilicate by extracting from 20 to 40 wt% of the alumina therefrom; combining the de-aluminated MFI or MEL aluminosilicate with a binder; and calcining the combination of the de-aluminated MFI or MEL aluminosilicate and the binder at elevated temperature to produce the catalyst additive.

2. A process according to claim 1, wherein the silicon/aluminium atomic ratio of the de-aluminated MFI or MEL aluminosilicate is from 11 to 1000.

3. A process according to claim 1 or claim 2, wherein the silicon/aluminium atomic ratio of the initial MFI or MEL aluminosilicate is from 10 to 300.

4. A process according to any one of claims 1 to 3, wherein the MFI or MEL aluminosilicate is an MFI-type crystalline silicate of the ZSM-5 type.

5. A process according to any foregoing claim, wherein the binder comprises aluminium oxide, silicon oxide, phosphates and clays or a mixture of both.

6. A process according to any foregoing claim, wherein the catalyst additive comprises from 25 to 75 wt% of the de-aluminated MFI or MEL aluminosilicate and from 75 to 25 wt% binder.

7. A process according to any foregoing claim, wherein the de-aluminating step on the MFI or MEL aluminosilicate is carried out by both heating the MFI or MEL aluminosilicate in steam and then contacting the MFI or MEL aluminosilicate with a complexing agent for aluminium, to remove aluminium from throughout the crystalline silicate framework and extract aluminium from the catalyst.

8. A process according to any one of claims 1 to 6, wherein the de-aluminating step on the MFI or MEL aluminosilicate is carried out by both heating the MFI or MEL aluminosilicate in steam and then contacting the MFI or MEL aluminosilicate with a phosphorous-containing mineral acid to remove aluminium from throughout the crystalline silicate framework and extract aluminium from the catalyst, and to deposit phosphorous in the dealuminated aluminosilicate.

9. A process according to claim 8, wherein the phosphorous-containing mineral acid comprises phosphoric acid.

10. A process according to claim 8 or claim 9, wherein the dealuminated alumonosilicate, after treatment with the phosphorous-containing mineral acid and washing, contains from 0.1 to 10 wt% phosphorous.

11. A process according to any foregoing claim, further comprising the step of combining the catalyst additive with a Y-type zeolite to produce a composite catalyst for fluidised catalytic cracking of a hydrocarbon feedstock, the composite catalyst comprising from 50 to 99.5 wt% of a Y-type zeolite containing catalyst and from 0.5 to 50 wt% of the catalyst additive.

12. A process according to claim 11 wherein the composite catalyst comprises from 1.5 to 15 wt% of the de-aluminated MFI or MEL aluminosilicate and from 98.5 to 85wt% of the binder and the Y-type zeolite.

13. A composite catalyst for fluidised catalytic cracking of a hydrocarbon feedstock, the composite catalyst comprising from 50 to 99.5 wt% of a Y-type zeolite and, as an additive therefor, from 0.5 to 50 wt% of a de-aluminated MFI or MEL aluminosilicate catalyst produced by the process of any one of claims 1 to 11.

14. A composite catalyst according to claim 13 wherein the composite catalyst comprises from 1.5 to 5 wt% of the de-aluminated MFI or MEL aluminosilicate and from 98.5 to 95wt% of the binder and the Y-type zeolite.

15. A composite catalyst for fluidised catalytic cracking of a hydrocarbon feedstock, the composite catalyst comprising from 50 to 99.5 wt% of a Y-type zeolite and, as an additive therefor, from 0.5 to 50 wt% of a de-aluminated MFI or MEL aluminosilicate catalyst comprising a de-aluminated MFI or MEL aluminosilicate having a silicon/aluminium atomic ratio of from 11 to 300 and a binder, the composite catalyst comprising from 1.5 to 5 wt% of the de-aluminated MFI or MEL aluminosilicate and from 98.5 to 95wt% of the binder and the Y-type zeolite.

16. A process for the fluidised catalytic cracking of a hydrocarbon feedstock, the process comprising contacting a hydrocarbon feedstock with the composite catalyst of any one of claims 10 to 12 to produce an effluent containing propylene.

17. A process according to claim 16, wherein the contacting step is carried out in an FCC reactor at an inlet temperature of from 500 to 650°C.

18. Use, for producing in the effluent a C3-cut of enhanced propylene purity, ofthe composite catalyst of any one of claims 10 to 12 in a fluidised catalytic cracking process for a hydrocarbon feedstock.

19. Use, for producing in the effluent a reduced content of dry gas, of the composite catalyst of any one of claims 13 to 15 in a fluidised catalytic cracking process for a hydrocarbon feedstock.
